Europäisches Patentamt

European Patent Office

Office européen des brevets

(11) Publication number: **0 255 065 B1**

# EUROPEAN PATENT SPECIFICATION

(45) Date of publication of patent specification: **29.09.93**  (51) Int. Cl.5: **H04L 1/00**, H04B 7/185

(21) Application number: **87110758.7**

(22) Date of filing: **24.07.87**

(54) **Burst signal detection apparatus.**

(30) Priority: **26.07.86 JP 176357/86**

(43) Date of publication of application:
**03.02.88 Bulletin 88/05**

(45) Publication of the grant of the patent:
**29.09.93 Bulletin 93/39**

(84) Designated Contracting States:
**DE FR GB IT NL**

(56) References cited:

**COMSAT - TECHNICAL REVIEW, vol. 16, no. 1, Spring 1986, pages 27-52, Clarksburg, MD, US; J.S. BARNETT et al.: "The intelsat TDMA system monitor"**

**MESURES. REGULATION AUTOMATISME, vol. 49, no. 7, 2nd May 1984, pages 43-46, Paris, FR; J.-P. VERNAY: "Transmissions de données: gagney de la place"**

**RASSEGNA INTERNAZIONALE ELETTRONICA E NUCLEARE. ATTI DEL XVIII CONGRESSO, 29th-31st March 1971, pages 381-388, Roma, IT; V. HALLER: "Error-correction systems with signal-quality detectors"**

PATENT ABSTRACTS OF JAPAN, vol. 5, no. 59 (E-53)[731], 22nd April 1981 & JP-A-56 8916

(73) Proprietor: **NEC CORPORATION**
**7-1, Shiba 5-chome Minato-ku**
**Tokyo 108-01(JP)**

(72) Inventor: **Otani, Susumu c/o NEC Corporation**
**33-1, Shiba 5-chome**
**Minato-ku Tokyo(JP)**

(74) Representative: **VOSSIUS & PARTNER**
**Postfach 86 07 67**
**D-81634 München (DE)**

Rank Xerox (UK) Business Services
(3.10/3.6/3.3.1)

**Description**

The present invention relates to a signal detection apparatus, and more particularly, to a burst signal detecting apparatus suitable for a communication system in which the probability of reception of erroneous data should be controlled to an extremely small value, e.g. a satellite communication system.

A burst signal applicable to a communication system of the type described is made up of CRC (Cyclic Redundancy Check) coded and error-correcting coded data and a unique word (UW) which precedes the data. A prior art signal detection apparatus for detecting such a burst signal basically comprises an error-correcting decoder, a CRC error detector, a UW detector, and an output circuit.

In the above-described kind of signal detection apparatus, the UW detector detects a unique word out of the burst signal and delivers to the output circuit an arrival signal, which is representative of the arrival of the data. The error-correcting decoder decodes the error-correcting code with regard to the data of the burst signal, feeding the decoded data to the CRC error detector. In response, the CRC error detector performs cyclic check on the decoded data to see if the received data is free from error, delivers the received data as output data to the outside, and feeds a decision signal representative of a result of decision to the output circuit. When received the arrival signal and if the content of the decision signal is "NO ERROR", the output circuit sends a signal detect signal to the outside annunciating that there are no errors in the output data.

A problem with the prior art signal detection apparatus described above is that the probability of reception of incorrect data cannot be reduced with ease, preventing the reliability of a communication channel from being increased, as discussed in detail later.

COMSAT - TECHNICAL REVIEW, vol. 16, No. 1, spring 1986, pp. 27-52, Clarksburg, MD, US; J.S. BARNETT et al.: "The intelsat TDMA system monitor" describes a Unique Word (UW) detector for burst position measurement which detects a presence of UW from a burst signal. MESURES. REGULATION AUTOMATISME, vol. 49, No. 7, 2nd May 1984, pp. 43-46, Paris, FR; J.-P. VERNAY: "Transmissions de données: gagney de la place" describes a Cyclic Reduncancy Check (CRC) control which adds CRC bits in a transmitting side and detects an error of transmitted data in a receiving side by using the CRC bits. RASSEGNA INTERNAZIONALE ELETTRONICA E NUCLEARE. ATTI DEL XVIII CONGRESSO, 29th-31st March 1971, pp. 381-388, Roma, IT; V. HALLER: "Error-correction systems with signal-quality detectors" describes error - correction systems with signal quality detectors which attains a very reliable error detection in received data at high channel utilization by using combinations of error correction codes and signal quality detectors.

It is an object of the present invention to provide a signal detecting apparatus which solves the problem of the prior art apparatus as stated above and allows the probability of reception of erroneous data to become extremely small. This object is solved with the features of the claims.

A burst signal detection apparatus as disclosed comprises a UW detector for receiving a burst signal comprising data undergone CRC coding and error-correcting coding and a unique word that precedes the data, and detecting the unique word out of the burst signal received, an error-correcting decoder for receiving the burst signal to decode an error-correcting code with regard to the data, a CRC error detector for receiving decoded data output by the error-correcting decoder to detect a CRC error, a channel quality detector for detecting channel quality based on one of an input/output condition and a decoding condition of the error-correcting decoder, and an output circuit for outputting a detection signal in response to outputs of the unique word detector, CRC error detector, and channel quality detector.

BRIEF DESCRIPTION OF THE DRAWINGS

Fig. 1 is a block diagram showing a prior art burst signal detection apparatus;
Fig. 2 shows a format of a burst signal;
Fig. 3 is a plot showing the distributions of the probability of non-detection and that of erroneous detection of a unique word;
Fig. 4 is a block diagram showing a burst signal communication system to which the burst signal detection apparatus of Fig. 1 is applied;
Fig. 5 is a block diagram showing a burst signal detection apparatus embodying the present invention;
Fig. 6 is a plot showing the distribution of the probability and density of transmission channel errors; and
Fig. 7 is a block diagram showing an essential part of another embodiment of the present invention.

## PREFERRED EMBODIMENTS OF THE INVENTION

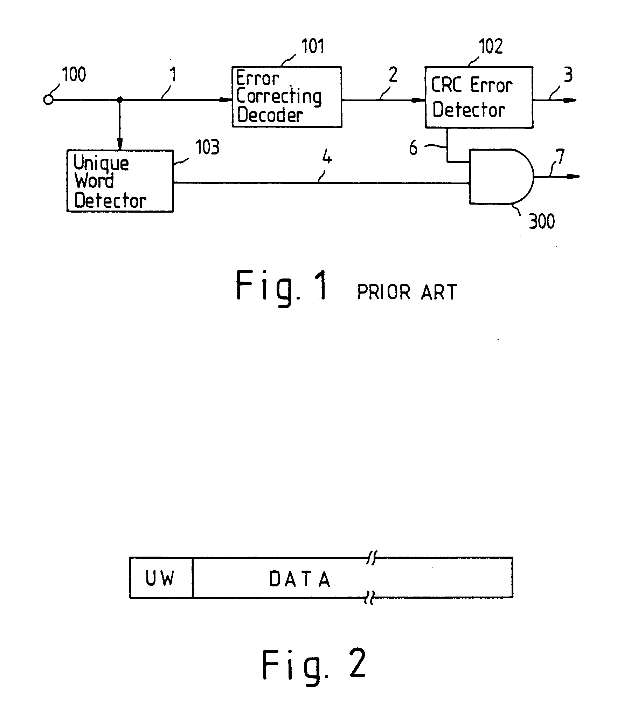

To better understand the present invention, a brief reference will be made to a paior art burst signal detection apparatus, shown in Fig. 1. As shown, the prior art apparatus basically comprises an error-correcting decoder 101, a CRC error detector 102, a UW detector 103, and an output circuit (an AND gate) 300.

As shown in Fig. 2, a burst signal 1 which is applied to an input terminal 100 is made up of data (DATA), and a unique word (UW) which precedes the data to indicate the beginning of the data. The data has undergone CRC coding and error-correcting coding at a transmitting station. The burst signal 1 is fed to the error-correcting decoder 101 and the UW detector 103.

In response, the UW detector 103 detects the unique word (UW) out of the burst signal 1 and delivers to the output circuit 300 an arrival signal 4, which is indicative of the arrival of the data (DATA). As well known in the art, the unique word is implemented with a fixed codeword.

The error-correcting decoder 101 decodes an error-correcting code with regard to the data (DATA) of the burst signal 1, delivering decoded data 2 to the CRC error detector 102.

The CRC error detector 102 performs cyclic check on the decoded data 2 to see if the received data is free from error, feeds the received data as output data 3 to the outside, and applies to the output circuit 300 a decision signal 6 which is representative of a result of decision.

Consequently, when received the arrival signal 4 and if the content of the decision signal 6 is "NO ERROR", the output circuit 300 sends a signal detection signal 7 to the outside informing that there are no errors in the output data 3.

However, in such a prior art system which decides that error-free correct data has been received based on the detection of a unique word and the CRC "NO ERROR", it is difficult to reduce the probability of receiption of erroneous data and, therefore, to enhance the reliability of a communication channel.

In detail, since such an error correction technique as a one applied to data is not applied to a unique word, the detection of a unique word suffers from a substantial error rate to bring about non-detection and erroneous detection. Generally, the probability of non-detection Pm and the probability of erroneous detection Pf are expressed as:

$$Pm = \sum_{i=\varepsilon+1}^{N} {}_{N}C_{i}\, P_{e}{}^{i}\, (1 - P_{e})^{N-i} \qquad \ldots\ldots \quad (1)$$

$$Pf = \sum_{i=0}^{\varepsilon} {}_{N}C_{i}\, (\frac{1}{2})^{N} \qquad \ldots\ldots \quad (2)$$

where N is the length of a unique word, $\epsilon$ is the tolerable number of error bits, and Pe is the bit error rate.

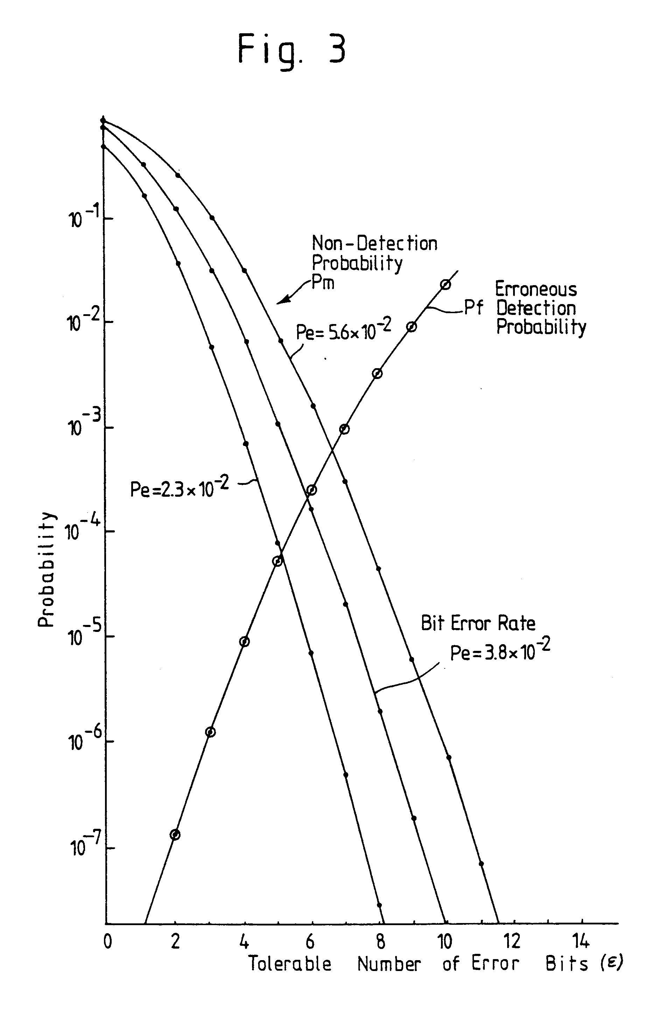

Although the non-detection probability Pm and the erroneous detection probability Pf may be reduced if the length N of a unique word is made longer, such would reduce the ratio of data length to unique word length and, thereby, the transmission efficiency. For this reason, difficulty is experienced in reducing the probability Pm and Pf. Further, in the case that the data transmission system for satellite communication is implemented with a random access system which allows a signal to be transmitted at any desired time, e.g., slotted ALOHA system, the arrival of a signal cannot be predicted and, hence, signal detection has to be performed all the time. In such a case, the frequency of error detection per unit time is as great as $Pf \cdot f_s$ times, where $f_s$ is the signalling rate. For reference, exemplary numerical values of Pm and Pf for N = 32 are shown in Fig. 3.

In CRC error detection, the detecting ability is generally determined by a relationship between the degree of a generator polynomial and the number of error bits. So far as satellite communication is concerned, a highly efficient error correction system is adopted to meet the demand for effective use of satellite power and, therefore, the error rate of decoded data of an error-correcting code is considerably low. However, once erroenous detection of a unique word occurs, i.e., once a random signal is input to an error-correcting decoder, the output signal also becomes a random signal. A CRC error detector determines such a random signal sometimes correct and sometimes incorrect. Specifically, assuming a sixteenth-degree polynomial as prescribed by CCITT Recommendation X.25, 2.2.7 and often applied to CRC error detection, although not greater than sixteen bits of errors may be detected without fail, seventeen or more bits of errors are sometimes detected and sometimes not. Should data be decided error-free despite the presence of errors, a terminal to handle data would take it in as correct data, sometimes resulting in a critical fault. Since the probability that data with seventeen or more bits of errors is decided error-free is $1/2^{16} = 1.5 \times 10^{-5}$ (see Inose et al. "DATA COMMUNICATIONS" Sanpo, pp. 87 to 91), assuming that the transmission rate is 56 kbps (kilobits per second) and the probability of erroneous detection Pf is $2.6 \times 10^{-4}$ - (corresponding to $\epsilon$ = 6 as shown in Fig. 3), the frequency of data slipping is $2.6 \times 10^{-4} \times 56 \times 10^3 \times 1.5 \times 10^{-5} = 2.1 \times 10^{-4}$ times per second. This implies that erroneous data is received substantially once per hour, aggravating the reliability of a communication channel.

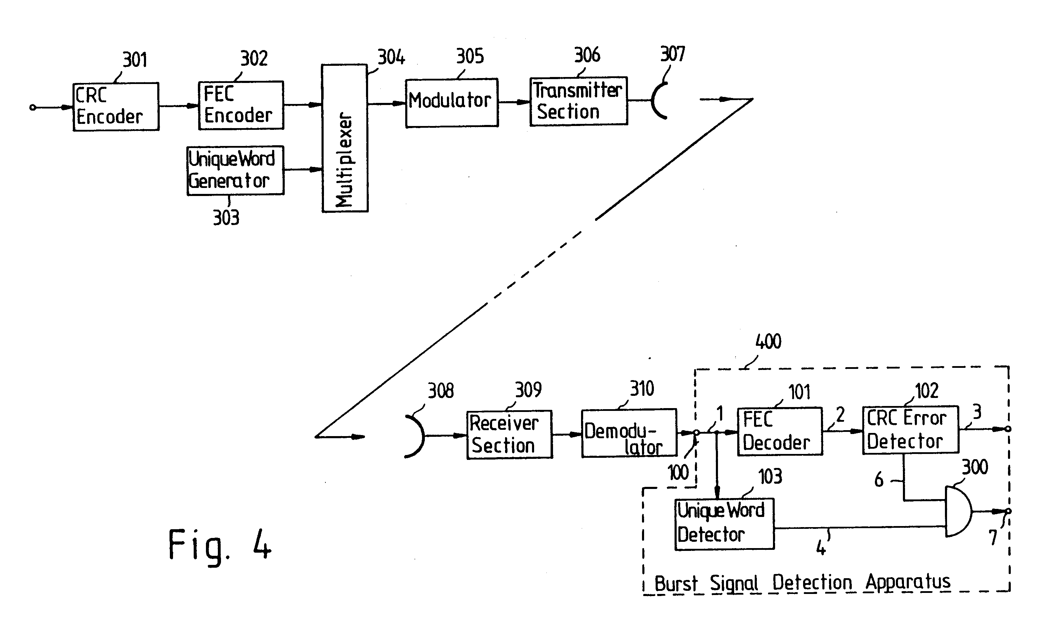

Fig. 4 shows a schematic block diagram of a burst signal communication system which uses the prior art burst signal detection apparatus of Fig. 1. As shown, a block or burst data is subjected to cyclic-check coding by a CRC encoder 301 and, then, to error-correction coding by an FEC (Forward Error Correction) encoder 302 which is one of error-correcting encoders known in the art, the resultant error-correction coded data being fed to a multiplexer 304. The multiplexer 304 combines a unique word fed thereto from a UW generator 303 and the error-correction coded data, in a burst signal format as shown in Fig. 2. The resulting burst signal is digitally modulated by a modulator 305 and, then, transmitted via a transmitter section 306 and an antenna 307. A digitally modulated burst signal is picked up by an antenna 308 and routed through a receiver section 309 to a demodulator 310 to be thereby demodulated to a burst signal. This burst signal is detected by a burst signal detection apparatus 400 in the manner described with reference to Fig. 1.

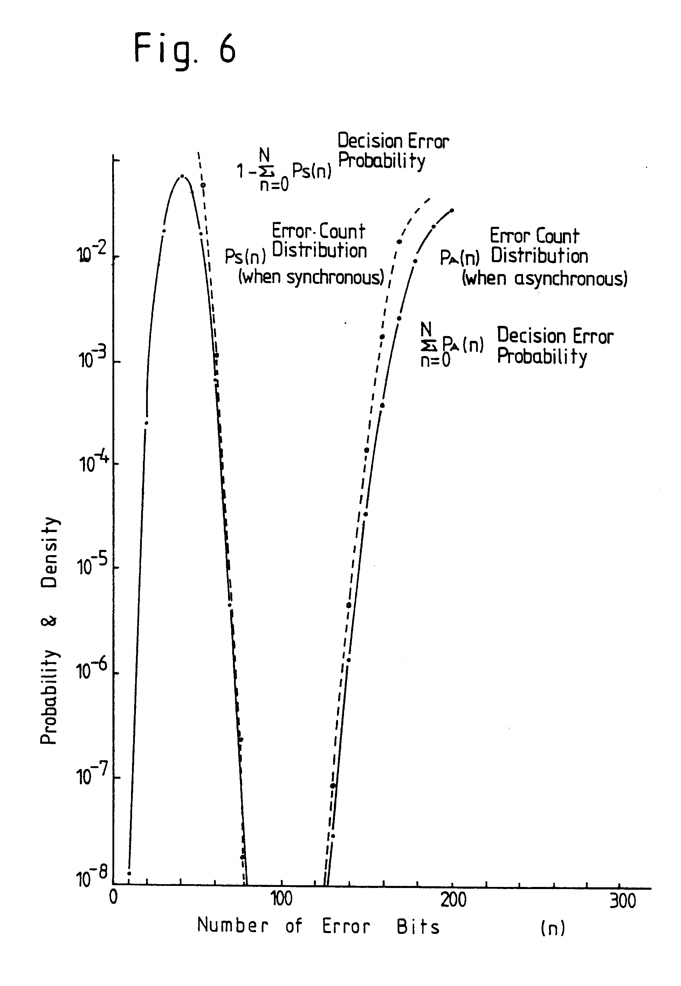

For details of an FEC encoder and an FEC decoder, a reference may be made to "SCPC/QPSK AND SCPC/PCM/QPSK SYSTEM SPECIFICATION" INTELSAT EARTH STATION STANDARDS (IESS) Document IESS-303, pp. 1 to 61, especially Figs. 6, published July 1, 1985. As regards the CRC encoder 301, see POLYNOMIAL GENERATOR (MC8506) available from Motorola.

Contemplated to solve the problem particular to the prior art as discussed above, the burst signal detection apparatus in accordance with the present invention is capable of reducing the probability of reception of incorrect data to a significant extent by combining the quality of a communication channel with necessary conditions of signal detection.

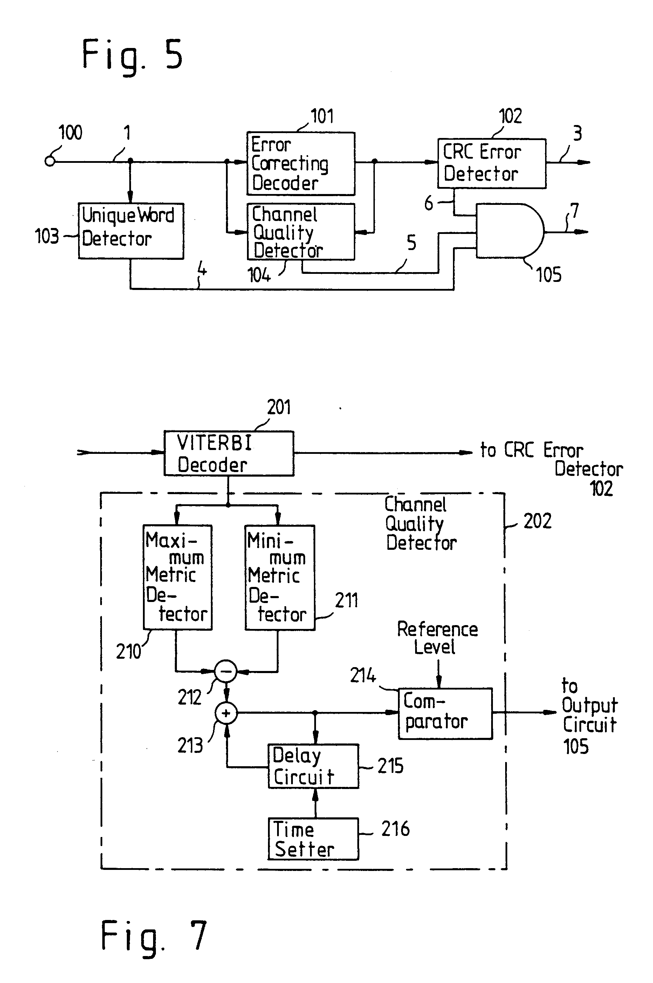

Referring to Fig. 5, a burst signal detection apparatus in accordance with the present invention is shown. In Fig. 5, the same or similar structural parts and elements as those of the prior art apparatus are designated by like reference numerals, and detailed description thereof will be omitted.

In the embodiment shown in Fig. 5, a channel quality detector 104 is provided in parallel to an error-correcting decoder 101. The output, or detect signal 5 of the channel quality detector 104 is fed to an output circuit 105 together with an arrival signal 4 and a decision signal 6. The channel quality detector 104 recodes an output of the error-correcting decoder 101, i.e., decoded data 2 and compares it with the input to the error correcting decoder 101, i.e., data contained in a burst signal 1, thereby estimating a channel error. When the estimated channel error is less than a threshold (a count number), the channel quality detector 104 produces the detect signal 5.

Assume that the period of time necessary for the channel quality detector 104 to determine bit errors, i.e., a unit number of bits to be decided is $10^3$ bits, and that the error rate of input code to the error-correcting decoder 101 is $3.8 \times 10^{-2}$ (under synchronous condition; SYNC) or $2 \times 10^{-1}$ (under asynchronous condition; ASYNC). Then, the error count distribution $P_A$ (n) under the asynchronous condition is produced by:

$$P_A(n) = \frac{200^n}{n!} e^{-200} \qquad \cdots \cdots \quad (3)$$

and the error count distribution $P_S$ (n) under the synchronous condition is produced by:

$$P_S(n) = \frac{40^n}{n!} e^{-40} \qquad \cdots \cdots \quad (4)$$

where n is the number of error bits as counted during the decision time ($10^3$ bits).

4

Fig. 6 is a plot showing exemplary numerical values produced by changing the number of error bits n of the equations (3) and (4) and decision error probability

$$1 - \sum_{n=0}^{N} P_S(n) \text{ and } \sum_{n=0}^{N} P_A(n)$$

(n = 0 to 300). It is to be noted that N in

$$1 - \sum_{n=0}^{N} P_S(n) \text{ and } \sum_{n=0}^{N} P_A(n)$$

is the decision threshold value.

In Fig. 6, the ordinate is representative of the probability that an error bit is decided correct. Although the probability less than $10^{-8}$ is not shown, it will be seen that, assuming that the decision threshold N is 100, i.e., that the number of error bits n is 100, the probability that an error bit is decided correct after the erroneous detection of a unique word is less than $10^{-9}$.

It follows that assuming that the time when all of the conditions (1) detection of a unique word, (2) channel error less than the decision threshold N (assuming that N is 100, the decision error probability is $10^{-9}$), and (3) no CRC error (as regards the previously mentioned exemplary values, the frequency of data slipping is $2.1 \times 10^{-4}$) are met is the signal detection reference, the frequency of data slipping per unit time is

$2.1 \times 10^{-4} \times 10^{-9} = 2.1 \times 10^{-13}$ times per second $\doteq$ once per $10^5$ years

Such a frequency is fully negligible.

Referring to Fig. 7, another embodiment of the present invention is shown in which the error-correcting decoder 101 of the first embodiment is replaced with a Viterbi decoder 201 which is a maximum likelihood decoder. A channel quality detector 202 is constructed to estimate channel quality by using metrics defined in the Viterbi decoder 201. As regards the Viterbi decoder, a reference may be made to U.S. Patent 3,789,360 issued January 29, 1974 and U.S. Patent 4,536,878 issued August 20, 1985.

The Viterbi decoder 201 has metrics each corresponding to a respective one of different states (e.g. sixty-four states for a constraint length of 7) which are produced by integrating branch metrics which are in turn obtained from the bust signal 1. While various approaches may be contemplated for estimating channel quality by synchronization decision based on the metrics, the following construction is adopted in this particular embodiment.

The channel quality detector 202 basically comprises a maximum metric detector 210, a minimum metric detector 211, a subtractor 212, an adder 213, a comparator 214, a delay circuit 215, and a time setter 216. The maximum metric detector 210 and the minimum metric detector 211 detect, respectively, the maximum one and the minimum one of the metrics of all the states in the Viterbi decoder 201, the minimum and maximum metrics being fed to the subtractor 212. In response, the subtractor 212 determines a difference between the maximum and minimum metrics and delivers the difference to the adder 213. The time setter 216 sets an integration time of, for example, 1 second in the closed loop which extends from the adder 213 to the adder 213 via the delay circuit 215, applying the integration time to the delay circuit 215. The delay circuit 215 may be implemented with a 1-bit delay element by way of example. A result of integration in the closed loop is fed to the comparator 214. Then, the comparator 214 compares the result of integration with a predetermined threshold and, if the former is greater than the latter, determines that synchronization is set up and, if otherwise, determines that it is not set up. A result of such a decision is representative of channel quality and is the previously stated etection signal 5.

In summary, it will be seen that the present invention provides a burst signal detection apparatus in which channel quality is added to necessary conditions for signal detection so that, even if an UW detector erroneously detects a unique word or if a CRC error detector decides data correct despite the presence of errors, a signal detector is prevented from delivering its output so long as the channel quality is short of a predetermined one. Hence, the probability that noise and other erroneous data are handled as correct data is significantly reduced, whereby a communication channel with a considerable degree of reliability is achievable.

**Claims**

1. A burst signal detection apparatus which receives a burst signal (1) comprising CRC coded and error-correction coded data and a unique word (UW) preceding the data, comprising a unique word detector means (103) for detecting the unique word out of the burst signal; an error-correcting decoder means (101) for decoding the error-correction coded data; a CRC error detector means (102) for decoding the output of the error-correcting decoder means to detect a CRC error; an output circuit means (105) for providing a detection signal (7) in response to the outputs of the unique word detector means (103) and the CRC error detector means (102), characterized by further comprising a channel quality detector means (104) for detecting channel quality based on one of an input/output condition and a decoding condition of the error-correcting decoder means (101) to supply its output to an input of the output circuit means (105).

2. A burst signal detection apparatus as claimed in Claim 1, wherein the output circuit comprises an AND gate.

**Patentansprüche**

1. Bündelsignalvorrichtung, die ein Bündelsignal (1) mit CRC-kodierten und mittels Fehlerkorrektur kodierten Daten und mit einem den Daten vorangehenden Unikatwort (UW) empfängt, die aufweist:
   eine unikatwort-Detektorvorrichtung (103), um das Unikatwort aus dem empfangenen Bündelsignal zu detektieren;
   eine Fehlerkorrekturdekodervorrichtung (101), um die mittels eines Fehlerkorrekturkodes kodierten Daten zu dekodieren;
   eine CRC-Fehlerdetektorvorrichtung (102) zum Dekodieren des von dem Fehlerkorrekturdekoder ausgegebenen Ausgangssignals, um einen CRC-Fehler zu detektieren;
   eine Ausgangsschaltungsvorrichtung (105), um ein Detektionssignal (7) als Reaktion auf die Ausgangssignale der Unikatwort-Detektorvorrichtung (103) und der CRC-Fehlerdetektorvorrichtung (102) zu schaffen,
   gekennzeichnet, ferner durch:
   eine Kanalqualitätsdetektorvorrichtung (104), um die entweder auf einem Eingangs/Ausgangs-Zustand oder einem Dekodierungszustand der Fehlerkorrekturdekodervorrichtung (101) basierende Kanalqualität zu detektieren, um ihr Ausgangssignal an einen Eingang der Ausgangsschaltungsvorrichtung (105) zu liefern.

2. Bündelsignalvorrichtung nach Anspruch 1, wobei die Ausgangsschaltung ein UND-Gatter aufweist.

**Revendications**

1. Dispositif de détection de signaux en rafale qui reçoit des signaux en rafale (1) comprenant des données codées CRC et des données codées de correction d'erreur et un mot particulier (UW) précédant les données, comprenant un moyen de détecteur de mot particulier (103) pour détecter le mot particulier parmi les signaux en rafale ; un moyen de décodeur de correction d'erreur (101) pour décoder les données codées de correction d'erreur ; un moyen de détecteur d'erreur CRC (102) pour décoder la sortie du moyen de décodeur de correction d'erreur afin de détecter une erreur CRC ; un moyen de circuit de sortie (105) pour délivrer un signal de détection (7) en réponse aux sorties du moyen de détecteur de mot particulier (103) et du moyen de détecteur d'erreur CRC (102) caractérisé en ce qu'il comprend de plus un moyen de détecteur de qualité de canal (104) pour détecter la qualité du canal basée sur une des conditions d'entrée/sortie et une condition de décodage du moyen de décodeur de correction d'erreur (101) pour appliquer sa sortie à une entrée du moyen de circuit de sortie (105).

2. Dispositif de détection de signaux en rafale selon la revendication 1, dans lequel le circuit de sortie comprend une porte ET.

Fig. 1 PRIOR ART

Fig. 2

7

# Fig. 3

Fig. 4

EP 0 255 065 B1

## Fig. 5

## Fig. 7

10

# Fig. 6

Decision Error Probability
$1 - \sum_{n=0}^{N} P_S(n)$

$P_S(n)$ Error·Count Distribution (when synchronous)

Error Count $P_A(n)$ Distribution (when asynchronous)

$\sum_{n=0}^{N} P_A(n)$ Decision Error Probability

Probability & Density

Number of Error Bits $(n)$